# EUROPÄISCHE PATENTSCHRIFT

(11) **EP 2 371 142 B1**
(45) Veröffentlichungstag und Bekanntmachung des Hinweises auf die Patenterteilung: **16.08.2017**
(21) Anmeldenummer: 09752284.1
(22) Anmeldetag: 27.10.2009
(51) Int. Cl.: H04Q 1/02, H05K 7/18

(54) **VORRICHTUNG ZUR AUFNAHME VON KOMPONENTEN DER TELEKOMMUNIKATIONS- UND DATENTECHNIK**
DEVICE FOR ACCOMMODATING COMPONENTS OF TELECOMMUNICATION AND DATA SYSTEMS TECHNOLOGY
DISPOSITIF DESTINÉ À RECEVOIR DES COMPOSANTS DU DOMAINE TECHNIQUE DES TÉLÉCOMMUNICATIONS ET DE L'INFORMATIQUE

(30) Priorität: 27.11.2008 DE 102008059383
(43) Veröffentlichungstag der Anmeldung: 05.10.2011
(73) Patentinhaber: Tyco Electronics Services GmbH, 8200 Schaffhausen (CH)
(72) Erfinder: BUSSE, Ralf-Dieter, 15366 Hoppegarten (DE)
(74) Vertreter: Patentanwälte Bressel und Partner mbB
(86) Internationale Anmeldenummer: PCT/EP2009/007667
(87) Internationale Veröffentlichungsnummer: WO 2010/060512

(56) Entgegenhaltungen:
- EP-A2- 0 151 478
- EP-A2- 0 304 393
- DE-A1- 4 227 531
- GB-A- 2 055 252

## Beschreibung

Die Erfindung betrifft eine Vorrichtung zur Aufnahme von Komponenten der Telekommunikations- und Datentechnik.

Es sind vielfältige Bauformen von Vorrichtungen zur Aufnahme von Komponenten der Telekommunikations- und Datentechnik bekannt.

Ein bekanntes System verwendet Rundprofilstangen, auf die Leisten oder Module der Telekommunikations- und Datentechnik aufgeschnappt werden können. Dabei kommen vorzugsweise zwei beabstandete Rundprofilstangen zum Einsatz, die zueinander beabstandet angeordnet sind, wobei die Leisten bzw. Module entsprechend zwei beabstandete bogenförmige Schnappelemente aufweisen. Ein solches System ist beispielsweise aus der EP 0 304 393 A bekannt. Weiter ist es bekannt, Leisten oder Module mit Ring- oder Gabelkontakten auf die Rundprofilstangen zu rasten, um neben einer mechanischen Halterung auch eine Erdverbindung über die Rundprofilstangen zu erreichen. Die Rundprofilstangen erstrecken sich dabei in Längsrichtung und weisen einen kreisförmigen Querschnitt auf. Die Rundprofilstangen werden über geeignete separate Haltekörper in vertikaler oder horizontaler Lage positioniert und gehalten.

Aus der GB 2 055 252 A ist ein Grundgestell zur Aufnahme einer Vielzahl von Anschlussblöcken bekannt, dass ein kanalähnliches Grundelement und zwei Halterungen aufweist, von denen eine auf jeder Seite des Kanals angeordnet ist. Die Halterungen tragen jeweils einen Anschlussblock entlang dem Grundelement. Mindestens je eine der zwei Halterungen weisen schlitzförmige Öffnungen zum Einführen von Drähten zum Anschluss an die Anschlussblöcke auf. Das Grundgestell weist Bezeichnungsbänder auf, die zwischen den Anschlussblöcken eingefügt und von federnden Auslegern auf jeder Seite der Halterung getragen sind, wobei an wenigstens einer Seite geschlitzte Verteilerringe als Abstandshalter angebracht sind.

Der Erfindung liegt das technische Problem zugrunde, eine alternative Vorrichtung zur Aufnahme von Komponenten der Telekommunikations- und Datentechnik zu schaffen.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu umfasst die Vorrichtung zur Aufnahme von Komponenten der Telekommunikations- und Datentechnik mindestens einen sich in Längsrichtung erstreckenden Träger mit einem Querschnitt zur Aufnahme von Ring- oder Gabelkontakten oder bogenförmigen Schnappelementen, wobei der Querschnitt eine Kontur aufweist, bei der mindestens drei Punkte der Kontur auf einem gemeinsamen Kreis K mit dem Radius R liegen, wobei die Kontur einen Öffnungswinkel α von kleiner/gleich 180° aufweist, und mindestens zwei der drei auf dem Kreis liegenden Punkte der Kontur einen Krümmungsradius kleiner dem Radius R aufweisen. Dabei sei angemerkt, dass es sich bei dem Kreis um einen imaginären Kreis handelt. Dabei ist bei einer geschlossenen Kontur der Öffnungswinkel α 0°, wobei bei einer offenen Kontur der Öffnungswinkel α zwischen zwei Schenkeln gemessen wird, wobei die Schenkel jeweils durch den Kreismittelpunkt des Kreises gehen und die offene Kontur berühren. Durch die Ausbildung der Kontur wird erreicht, dass es zu mindestens drei Kontaktpunkten zwischen Träger und Komponente kommt, so dass eine sichere mechanische Befestigung und, falls gewünscht, eine sichere Erdverbindung erreicht wird. Durch die Krümmungsradien kleiner als der Radius R des Kreises ist zudem sichergestellt, dass sich die Komponenten ausreichend leicht auf der Kontur verdrehen lassen, insbesondere bei der Kontaktierung metallischer Gabel- oder Ringkontakte.

Somit bleiben alle Vorteile der Rundprofilstangen im Wesentlichen erhalten, wobei jedoch die Vorrichtung konstruktionstechnisch mehr Freiheitsgrade aufweist und somit auch für kompaktere Bauweisen geeignet ist. Die Vorrichtung besteht dabei vorzugsweise aus Blech.

Vorzugsweise liegen genau drei Punkte der Kontur auf dem imaginären Kreis.

In einer weiteren bevorzugten Ausführungsform ist der Öffnungswinkel größer als 0°, so dass die Kontur offen ist.

In einer weiteren bevorzugten Ausführungsform schließt sich an einen den Öffnungswinkel begrenzenden Teil des Trägers ein Haltekörper an. Dabei sei angemerkt, dass sich am Träger mit geschlossener Kontur ebenfalls ein Haltekörper anschließen kann.

In einer weiteren bevorzugten Ausführungsform ist die Vorrichtung mit zwei Trägern ausgebildet, die mit einem gemeinsamen Haltekörper verbunden sind, wobei weiter vorzugsweise an dem Haltekörper Kabelbefestigungen und/oder Kabelführungen angeordnet sind bzw. der Haltekörper mit diesen ausgebildet ist.

In einer weiteren bevorzugten Ausführungsform ist die Vorrichtung einstückig ausgebildet und weiter vorzugsweise als Stanz-Biegeteil. Dadurch kann ein sehr kompakter Aufbau erreicht werden, wobei die komplette Vorrichtung nur ein Teil ist. Des Weiteren reduziert dies Kosten für Herstellung und Lagerung und vereinfacht den Aufbau.

Die Erfindung wird nachfolgend anhand eines bevorzugten Ausführungsbeispiels näher erläutert. Die Fig. zeigen:
- Fig. 1a: eine Kontur eines Querschnitts eines Trägers eines ersten Ausführungsbeispiels,
- Fig. 1b: eine Kontur eines Querschnitts eines Trägers eines zweiten Ausführungsbeispiels,
- Fig. 1c: eine Kontur eines Querschnitts eines Trägers eines dritten Ausführungsbeispiels und
- Fig. 2: einen Querschnitt durch eine Vorrichtung mit zwei Trägern und einem gemeinsamen Haltekörper.

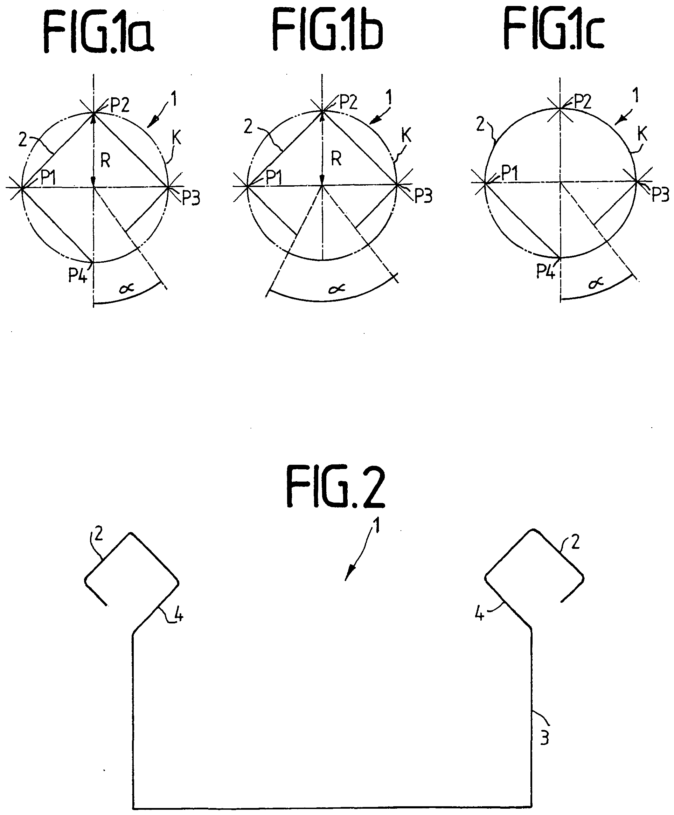

In der Fig. 1a ist eine Kontur eines Querschnitts eines Trägers 2 einer ersten Ausführungsform einer Vorrichtung 1 zur Aufnahme von Komponenten der Telekommunikations- und Datentechnik dargestellt. Die Kontur entspricht dabei im Wesentlichen einem Quadrat, wobei die eine Seite teilweise entfernt ist. Dabei liegen die Punkte P1-P4 auf einem Kreis K mit dem Radius R, wobei sich ein Öffnungswinkel α kleiner/gleich 180° einstellt, wobei im dargestellten Beispiel α = 45° ist. Die Krümmungsradien der Punkte P1-P3 der Kontur sind dabei kleiner als der Radius R des Kreises K. Dabei sei angemerkt, dass im Falle eines scharfen Knickes an den Punkten P1-P3 mathematisch streng genommen kein Krümmungsradius vorliegt. Aufgrund der Tatsache, dass diese Knicke jedoch in der Blechtechnik nicht exakt scharfkantig sind, ergibt sich ein entsprechend kleiner realer Krümmungsradius, so dass ausdrücklich betont wird, dass derartige im Prinzip scharfkantige Abknicke erfindungsgemäß mit umfasst sind.

In der Fig. 1b ist eine zweite Ausführungsform dargestellt, wobei genau drei Punkte P1-P3 auf dem Kreis K liegen, wobei sich ein Öffnungswinkel α von 90° einstellt. Die Krümmungsradien aller drei Punkte P1-P3 sind dabei wieder kleiner als der Radius R.

Schließlich ist in Fig. 1c eine dritte Ausführungsform dargestellt, wobei unendlich viele Punkte auf dem Kreis K liegen. Die Punkte P1 und P3 weisen einen Krümmungsradius kleiner als der Radius R auf, wobei der Punkt P2 und die benachbarten Punkte einen Krümmungsradius gleich dem Radius R aufweisen. Der Öffnungswinkel α ist ungefähr 45°.

In der Fig. 2 ist die Vorrichtung 1 mit zwei Trägern 2 und einem gemeinsamen Haltekörper 3 dargestellt, der im Querschnitt U-förmig ist. Der rechte Träger 2 entspricht dabei der Ausführungsform gemäß Fig. 1a, wobei der linke Träger genau spiegelverkehrt ausgebildet ist. Der jeweils längere, offene Schenkel 4 der Kontur geht dabei als Verlängerung in den Haltekörper 3 über. Der Haltekörper 3 hat beispielsweise die Form einer Wanne, deren Seitenwände beispielsweise mit Kabelführungen oder Kabelbefestigungen ausgebildet sind. Hierdurch kann eine sehr kompakte, einstückige Vorrichtung 2 realisiert werden, die alle benötigten Elemente integriert.

Abschließend sei angemerkt, dass der Radius R des Kreises vorzugsweise dem Radius der zu ersetzenden Rundprofilstangen entspricht, also üblicherweise 6 mm.

### Bezugszeichenliste

- 1: Vorrichtung
- 2: Träger
- 3: Haltekörper
- 4: Schenkel
- K: Kreis
- R: Radius
- P1-P4: Punkte
- α: Öffnungswinkel

## Patentansprüche

1. Vorrichtung (1) zur Aufnahme von Komponenten der Telekommunikations- und Datentechnik, umfassend mindestens einen sich in Längsrichtung erstreckenden Träger (2) mit einem Querschnitt zur Aufnahme von Ring- oder Gabelkontakten oder bogenförmigen Schnappelementen,
**dadurch gekennzeichnet, dass**
der Querschnitt eine Kontur aufweist, bei der mindestens drei Punkte (P1-P4) der Kontur auf einem gemeinsamen Kreis K mit dem Radius R liegen, wobei die Kontur einen Öffnungswinkel α von kleiner/gleich 180° aufweist, wobei bei einer geschlossenen Kontur der Öffnungswinkel α 0° ist und bei einer offenen Kontur der Öffnungswinkel α zwischen zwei Schenkeln gemessen wird, wobei die Schenkel jeweils durch den Kreismittelpunkt des Kreises gehen und die offene Kontur berühren, und die Kontur in mindestens zwei der drei auf dem Kreis liegenden Punkte einen Krümmungsradius kleiner dem Radius R aufweist.

2. Vorrichtung nach Anspruch 1, **dadurch gekennzeichnet, dass** genau drei Punkte auf dem Kreis K liegen.

3. Vorrichtung nach Anspruch 1 oder 2, **dadurch gekennzeichnet, dass** der Öffnungswinkel größer als 0° ist.

4. Vorrichtung nach Anspruch 3, **dadurch gekennzeichnet, dass** sich an einen den Öffnungswinkel α begrenzenden Teil des Trägers (2) ein Haltekörper (3) anschließt.

5. Vorrichtung nach Anspruch 4, **dadurch gekennzeichnet, dass** die Vorrichtung (1) mit zwei Trägern (2) ausgebildet ist, die mit einem gemeinsamen Haltekörper (3) verbunden sind.

6. Vorrichtung nach Anspruch 4 oder 5, **dadurch gekennzeichnet, dass** an dem Haltekörper (3) Kabelbefestigungen und/oder Kabelführungen angeordnet sind.

7. Vorrichtung nach einem der Ansprüche 4 bis 6, **dadurch gekennzeichnet, dass** die Vorrichtung (1) einstückig ausgebildet ist.

8. Vorrichtung nach einem der vorangegangenen Ansprüche, **dadurch gekennzeichnet, dass** die Vorrichtung (1) als Stanz-Biegeteil ausgebildet ist.

## Claims

1. An apparatus (1) for accommodating components from telecommunications and data technology, comprising at least one mount (2) extending in the longitudinal direction with a cross section for accommodating ring-shaped or fork-shaped contacts or arcuate snap-action elements, **characterized in, that** the cross section has a contour in which at least three points (P1-P4) of the contour lie on a common circle K with the radius R, the contour having an opening angle α of less than/equal to 180°, wherein the opening angle α of a closed contour is 0° and the opening angle α of an open contour is measured between two limbs, wherein the limbs extend via the center of the circle and contact the open contour, and at least two of the three points of the contour lying on the circle having a radius of curvature which is smaller than the radius R.

2. The apparatus as claimed in claim 1, wherein precisely three points lie on the circle K.

3. The apparatus as claimed in claim 1 or 2, wherein the opening angle is greater than 0°.

4. The apparatus as claimed in claim 3, wherein a holding body (3) adjoins a part of the mount (2) which delimits the opening angle α.

5. The apparatus as claimed in claim 4, wherein the apparatus (1) is designed to have two mounts (2), which are connected to a common holding body (3).

6. The apparatus as claimed in claim 4 or 5, wherein cable fastenings and/or cable guides are arranged on the holding body (3).

7. The apparatus as claimed in one of claims 4 to 6, wherein the apparatus (1) is designed to be integral.

8. The apparatus as claimed in one of the preceding claims, wherein the apparatus (1) is in the form of a stamped, bent part.

## Revendications

1. Dispositif (1) destiné à recevoir des composants du domaine technique des télécommunications et de l'informatique, comprenant au moins un support (2) s'étendant dans le sens longitudinal avec une section transversale destinée à recevoir des contacts à tulipe et ou à lyre ou des éléments à encliquetage, **caractérisé en ce que** la section transversale présente un contour dans lequel au moins trois points (P1-P4) du contour reposent sur un cercle commun K avec le rayon R, dans lequel le contour présente un angle d'ouverture α inférieur/égal à 180°, dans lequel dans un contour fermé, l'angle d'ouverture α est égal à 0° et dans un contour ouvert, l'angle d'ouverture α est mesuré entre deux branches, dans lequel les branches passent respectivement à travers le centre du cercle et touchent le contour ouvert, et le contour présente un rayon de courbure inférieur au rayon R dans au moins deux des trois points reposant sur le cercle.

2. Dispositif selon la revendication 1, **caractérisé en ce que** précisément trois points reposent sur le cercle K.

3. Dispositif selon la revendication 1 ou 2, **caractérisé en ce que** l'angle d'ouverture est supérieur à 0°.

4. Dispositif selon la revendication 3, **caractérisé en ce qu'**un corps de retenue (3) se raccorde sur une partie du support (2) délimitant l'angle d'ouverture α.

5. Dispositif selon la revendication 4, **caractérisé en ce que** le dispositif (1) est conçu avec deux supports (2) qui sont reliés à un corps de retenue (3) commun.

6. Dispositif selon la revendication 4 ou 5, **caractérisé en ce que** des fixations de câble et/ou des guidages de câble sont disposé(e)s sur le corps de retenue (3).

7. Dispositif selon l'une des revendications 4 à 6, **caractérisé en ce que** le dispositif (1) est formé d'un seul tenant.

8. Dispositif selon l'une des revendications précédentes, **caractérisé en ce que** le dispositif (1) est conçu en tant que pièce pliée découpée.
